# EUROPÄISCHE PATENTSCHRIFT

(11) **EP 1 221 639 B1**
(45) Veröffentlichungstag und Bekanntmachung des Hinweises auf die Patenterteilung: **30.06.2010**
(21) Anmeldenummer: 01129877.5
(22) Anmeldetag: 14.12.2001
(51) Int. Cl.: G05B 19/05

(54) **Programmierung von zyklischen Maschinen**
Programming of cyclic running machines
Programmation de machines cycliques

(30) Priorität: 27.12.2000 DE 10065417
(43) Veröffentlichungstag der Anmeldung: 10.07.2002
(73) Patentinhaber: SIEMENS AKTIENGESELLSCHAFT, 80333 München (DE)
(72) Erfinder: Amrhein, Armin, 92245 Kümmersbruck (DE); Birzer, Johannes, 92551 Stulln (DE); Hennefelder, Thomas, 91484 Sugenheim (DE); Kiesel, Martin, 91099 Poxdorf (DE); Kram, Raimund, 91056 Erlangen (DE); Schmitt, Regina, 91056 Erlangen (DE)

(56) Entgegenhaltungen:
- EP-A- 0 332 148
- DE-A1- 19 500 957
- DE-C1- 19 915 850
- US-A- 5 068 778

## Beschreibung

Die Erfindung bezieht sich auf ein Verfahren zur Programmierung von zyklischen Maschinen, insbesondere von Produktionsmaschinen.

Es ist heutzutage üblich, sowohl für die speicherprogrammierbare Steuerung (SPS) als auch für die Bewegungssteuerung (MC) jeweils unterschiedliche hierarchische Ablaufebenen zu modellieren, denen Software-Tasks zur Steuerung des jeweiligen technischen Prozesses zugeordnet werden. Diese Tasks können Systemaufgaben erfüllen, sie können aber auch anwenderprogrammiert sein.

Aus DE 197 40 550 A1 ist es bekannt, dass Prozesssteuerungsfunktionalitäten der speicherprogrammierbaren Steuerungen "SPS" und Bewegungsfunktionalitäten von MC-Steuerungen in einem einheitlichen konfigurierbaren Steuerungssystem integriert werden können.

Diese SPS/MC-Integration geschieht in Form des Zusammenschaltens von SPS- und MC-Steuerungsbaugruppen. Bei einer solchen Ausführung der Integration wird aber keine optimale und effiziente Taskstruktur für die Gesamtheit der Steuerungsaufgaben erreicht. Außerdem werden bei dieser Art der Integration hauptsächlich die klassischen MC-Funktionalitäten, wie sie insbesondere für Werkzeugmaschinen relevant sind, unterstützt. Anforderungen an die Steuerung, wie sie aus dem Betrieb von Produktionsmaschinen bekannt sind, werden durch diese Art des Zusammenschaltens von SPS- und MC-Steuerungsbaugruppen nicht optimal unterstützt.

Aus EP 0 735 445 A2 ist es bekannt, zum Betrieb einer Werkzeugmaschine oder eines Roboters einen gesonderten Wartebefehl (WAIT) zu gebrauchen. Der hier beschriebene Wartebefehl (WAIT) unterstützt aber insbesondere die Steuerung von Produktionsmaschinen noch nicht optimal.

In der Anmeldung DE 19 93 19 33.2 wird vorgeschlagen, den Takt des Kommunikationssystems zwischen dem PC-System und den peripheren Geräten für einen Wechsel zwischen einem Echtzeitbetriebsprogramm und einem Nicht-Echtzeitbetriebsprogramm heranzunehmen. Hier ist es aber die Aufgabe dieser Taktabgreifung aus dem Kommunikationssystem, in einem industriellen Prozess einen möglichst reibungslosen Wechsel zwischen Echtzeit- und Nicht-Echtzeitanwendungen stattfinden zu lassen. Bei dieser Ausgestaltung wird der Grundtakt aber nur aus dem Takt des Kommunikationsmediums abgeleitet und er wird nur für den Wechsel des Betriebssystemsmodus eines PC-Systems verwendet.

Aus der DE 195 00 957 A1 ist ein Verfahren zur Steuerung von technischen Vorgängen oder Prozessen bekannt, das insbesondere für die Kraftstoffeinspritzung bei einer Brennkraftmaschine gedacht ist. Das Steuerprogramm ist in eine Reihe von verschiedenen Aufgabenprogrammen eingeteilt. Den einzelnen Aufgabenprogrammen werden unterschiedliche Prioritäten zugeordnet. Es kann vorkommen, dass eine vorbestimmte Bedingung nicht erfüllt ist. Zur Erfüllung dieser Bedingung wird ein spezifisches Aufgabenprogramm hochprior durchgeführt. Nach dessen Beendigung ist die Bedingung automatisch erfüllt, und es wird zum bisherigen Aufgabenprogramm wieder zurückgekehrt.

Des Weiteren benötigen die heutzutage üblichen Verfahren für die Programmierung zyklischer Maschinen unterschiedliche Programme, deren Koordinierung über sog. "Event-Handler" erfolgt. Die Programmierung zyklischer Maschinen ist damit umständlich und ein "Event-Handler" verursacht Overhead und drückt die Performance. Zyklischen Maschinen zeichnen sich im eingeschwungenen Zustand durch einen periodisch wiederkehrenden Vorgang oder Zyklus aus. Von diesem Zyklus ist direkt die Produktivität der Maschine abhängig. Eine Verkürzung bzw. Verkleinerung des Zyklus erhöht die Produktivität und die Performance der Maschine. Beispiele für zyklische Maschinen sind: Verpackungsmaschinen (z.B. Schlauchbeutelmaschinen, Füllmaschinen oder Verschließmaschinen) aber auch Pressen (z.B. Walzenvorschubmaschinen). Für die Performance von Verpackungsmaschinen sind z.B. eine schnelle Druckmarkensynchronisation und eine dazugehörige schnelle Überlagerung von Korrekturbewegungen ausschlaggebend. Heutzutage werden solche Aufgabenstellungen noch nicht optimal gelöst.

Der Erfindung liegt daher die Aufgabe zugrunde, für jeweils unterschiedliche Steuerungsaufgaben und unterschiedliche Randbedingungen bzw. Anforderungen des zugrunde liegenden technischen Prozesses in einfacher Weise ein konfigurierbares Ablaufebenenmodell für die Steuerungs-Tasks einer industriellen Steuerung für zyklische Maschinen zu erstellen, wobei die Programmierung des Maschinenablaufs in einem sequentiellen Programm erfolgen kann.

Die Erfinder gehen dabei von der Annahme aus, dass dies prinzipiell zum einen durch ein einheitliches konfigurierbares Ablaufebenenmodell für die Steuerungs-Tasks der industriellen Steuerung erreicht wird und zum anderen durch Mechanismen (Wait_for_Condition-Befehl), die es einem Anwender ermöglichen, im Programmfluss auf beliebige Bedingungen zu warten und höherprior zu reagieren.

Eine Lösung der Aufgabe gelingt mittels eines Verfahrens mit den Merkmalen nach einem der Ansprüche 1 bis 6.

Von dem Ansatz ausgehend wird die oben genannte Aufgabe durch folgende aufeinander folgenden Schritte gelöst:
a) Erstellen einer mit einem Runtime-Systeme ausgestatteten industriellen Steuerung mit priorisierten Ablaufebenen und Tasks, wobei mindestens eine sequentielle Ablaufebene erstellt wird,
b) Formulieren eines Maschinenablaufs in einem sequentiellen Programm und
c) im sequentiellen Programm durch spezifische Mechanismen Bereitstellen, dass
   1) das Warten auf das Erfülltsein von Bedingungen in einer hochprioren synchron getakteten Systemebene, hochprior durchgeführt werden kann und
   2) dass nach Erfülltsein der Bedingung die nachfolgende Programmsequenz bis zu einem definierten anwenderprogrammierten Ende in der hochprioren synchron getakteten Systemebene, hochprior durchgeführt werden kann,
   wobei den Ablaufebenen System- und/oder Anwenderprogramme zugeordnet werden.

Durch die Priorisierung der Ablaufebenen können die Tasks zum Betrieb der Steuerung je nach ihrer Wichtigkeit bzw. den Anforderungen, die an ihnen gestellt werden (z.B. bzgl. des Antwortzeitverhaltens) auf unterschiedlich prioren Ebenen zum Ablaufen kommen. Ein weiterer Vorteil liegt darin, dass der Anwender in einem sequentiellem Programm mit einfachen Mechanismen komplexe Synchronisationsbedingungen (z.B. das Warten auf das Eintreffen von Bedingungen) formulieren kann, ohne dass weitere Mechanismen wie z.B. Event-Handler erforderlich sind. Dadurch wird einerseits in der Steuerung Verwaltungs-Overhead vermieden und andererseits aus programmiertechnischer Sicht das Lokalitätsprinzip unterstützt. Durch die Zuladbarkeit von Programmen in die Ablaufebenen kann der Anwender die Funktionalität der Steuerung sehr flexibel an die zugrunde liegenden Anforderungen des technischen Prozesses anpassen.

Der beschriebene Mechanismus und der dazugehörige Befehle werden im Ausführungsbeispiel als "wait_for-condition" bezeichnet.

Eine erste Ausgestaltung der vorliegenden Erfindung liegt darin, dass die Ablaufebenen aus Systemebenen und/oder Anwenderebenen erstellt werden. Dadurch hat der Anwender die Möglichkeit sehr flexibel ein Runtime-System für eine industrielle Steuerung zu erstellen, das den jeweiligen Anforderungen und Randbedingungen des technischen Prozesses angemessen ist.

Eine weitere Ausgestaltung der vorliegenden Erfindung liegt darin, dass das Ablaufebenenmodell getaktet ist, wobei der Grundtakt aus einem internen Timer oder aus einem internen Takt eines Kommunikationsmediums oder aus einem externen Gerät oder von einer Größe , die zum technologischen Prozess gehört ableitbar ist. Dadurch kann sehr flexibel und sehr einfach der Grundtakt für das Ablaufebenenmodell abgeleitet werden. Dadurch, dass der Grundtakt für das Ablaufebenenmodell auch von einer Größe, die zum technologischen Prozess gehört, ableitbar ist, kann auf eine sehr einfache Weise eine direkte Rückkopplung aus dem technologischen Prozess zur Steuerung erhalten werden.

Ein Ausführungsbeispiel der Erfindung ist in der Zeichnung dargestellt und wird im folgenden erläutert.

Dabei zeigen:
- FIG 1: die wesentlichen Ablaufebenen einer klassischen speicherprogrammierbaren Steuerung,
- FIG 2: die wesentlichen Ablaufebenen einer Bewegungssteuerung,
- FIG 3: schematische Darstellung einer industriellen Steuerung,
- FIG 4: das Ablaufebenenmodell der erfindungsgemäßen industriellen Steuerung,
- FIG 5: ein Ausführungsbeispiel für das Zuladen von Anwenderprogrammen in die Anwenderebenen,
- FIG 6: ein Ausführungsbeispiel für den Gebrauch und den Mechanismus des Wait_for_Condition-Befehls, im Ablaufebenenmodell der erfindungsgemäßen industriellen Steuerung,
- FIG 7: ein weiteres Ausführungsbeispiel für den Gebrauch und den Mechanismus des Wait_for_Condition-Befehls, im Ablaufebenenmodell der erfindungsgemäßen industriellen Steuerung,
- FIG 8: die syntaktische Beschreibung des Wait_for_Condition-Befehls in einem Syntaxdiagramm,
- FIG 9: ein Beispiel für die Formulierung einer Expression in programmiersprachlicher Notation und
- FIG 10: in einer Schemadarstellung Möglichkeiten, wie der Grundtakt für die industrielle Steuerung gewonnen wird.

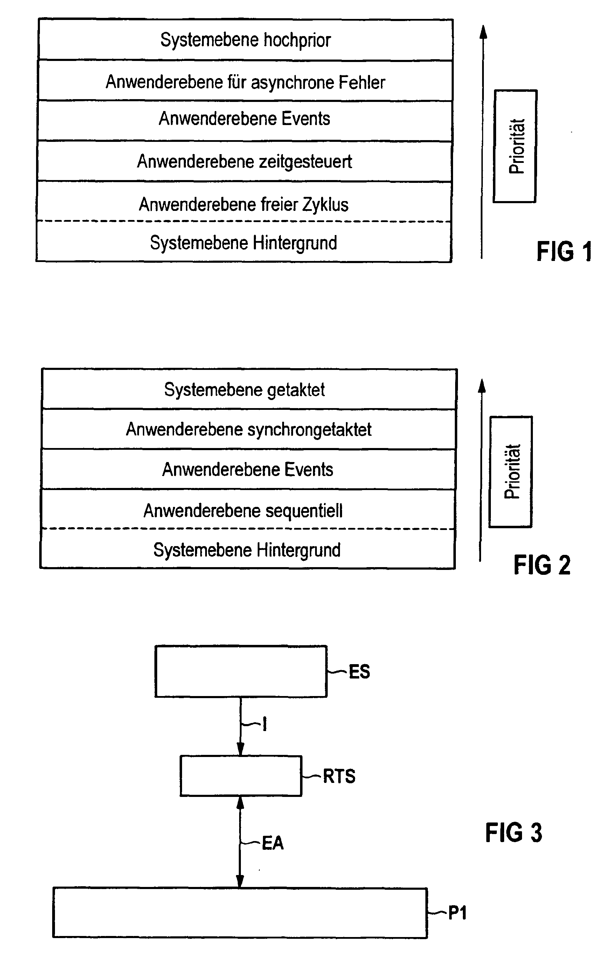

In der Darstellung gemäß FIG 1 sind die wesentlichen Ablaufebenen einer klassischen speicherprogrammierbaren Steuerung (SPS), angeordnet nach ihrer Priorität, gezeigt. Der Prioritätsanstieg ist dabei durch einen Pfeil symbolisiert. In der niederpriorsten Ebene werden, wie durch eine gestrichelte Linie angedeutet, zwei unterschiedliche Aufgaben, nämlich ein freier Zyklus, d.h. "Anwenderebene freier Zyklus" und eine Hintergrund-Systemebene, d.h. "Systemebene Hintergrund" abgewickelt. Der Hintergrund-Systemebene sind z.B. Kommunikationsaufgaben zugeordnet. Bei einer folgenden Anwenderebene, bezeichnet als "Anwenderebene zeitgesteuert", ist der Aufruftakt der Tasks bzw. der Programme dieser Ebene parametrierbar. Es erfolgt eine Überwachung dahingehend, ob die Bearbeitung eines Anwenderprogrammes dieser getakteten Ebene rechtzeitig abgeschlossen ist, bevor das Startereignis erneut auftritt. Läuft die Taktzeit ab, ohne dass das Anwenderprogramm der zugeordneten Ebene fertig abgearbeitet ist, wird eine entsprechende Task einer prioritätsmäßig übernächsten "Anwenderebene für asynchrone Fehler" gestartet. In dieser "Anwenderebene für asynchrone Fehler" kann der Anwender die Behandlung von Fehlerzuständen ausprogrammieren.
Auf die "Anwenderebene zeitgesteuert" folgt eine "Anwenderebene Events". Die Reaktion auf externe oder interne Ereignisse (Events) erfolgt innerhalb der "Anwenderebene Events". Ein typisches Beispiel für ein solches Ereignis ist das Schalten eines binären bzw. digitalen Eingangs, wodurch typischerweise ein Ereignis ausgelöst wird. In einer "Systemebene hochprior" liegen die Aufgaben des Betriebssystems, welche die Arbeitsweise der programmierbaren Steuerung (SPS) sicherstellen.

Die Darstellung gemäß FIG 2 zeigt die wesentlichen Ablaufebenen einer Bewegungssteuerung (MC). Auch hierbei sind die einzelnen Ebenen nach ihrer Priorität hierarchisch, wie durch einen Pfeil symbolisiert, angeordnet. Eine "Systemebene Hintergrund" und eine "Anwenderebene sequentiell" haben eine gleiche Priorität, nämlich die niedrigste. Diese aufgabenmäßige Zugehörigkeit ist wie bei FIG 1 durch eine gestrichelte Linie symbolisiert. Die Tasks der "Anwenderebene sequentiell" werden zusammen mit den Tasks der "Systemebene Hintergrund" im Round-Robin-Verfahren abgearbeitet. Typische Tasks der "Systemebene Hintergrund" sind z.B. solche für Kommunikationsaufgaben. In der "Anwenderebene sequentiell" laufen die vom Anwender programmierten Programmteile für die eigentliche Steuerungsaufgabe. Stößt die Steuerung in einem dieser Programmteile auf einen Bewegungs- oder Positionierbefehl, wird ein "Suspend" gesetzt, d.h. das Anwenderprogramm wird an dieser Stelle unterbrochen. In diesem Fall wird ein Befehl synchron genutzt. Die Abarbeitung dieses Bewegungs- oder Positionierbefehls geschieht in einer höchstprioren "Systemebene getaktet". Ein jeder Lageregler oder Interpolator, der in der "Systemebene getaktet" abläuft, führt diesen Bewegungs- bzw. Positionierbefehl aus. Nach Ausführung des Befehls wird in die "Anwenderebene sequentiell" zurückgesprungen und das durch "Suspend" unterbrochene Anwenderprogramm wird durch ein "Resume" an der gleichen Stelle fortgesetzt. Die "Systemebene getaktet" enthält neben den schon erwähnten Lagereglern auch den Interpolationsteil der Steuerung.

Auf die niederpriorste Ebene setzt die "Anwenderebene Events" auf. Hier sind solche Tasks untergebracht, die auf externe oder interne Ereignisse reagieren. Solche Ereignisse können beispielsweise Alarme sein.

In einer folgenden "Anwenderebene synchrongetaktet" laufen synchron getaktete Anwender-Tasks ab, z.B. Reglerfunktionalitäten. Diese Tasks sind synchronisiert zu getakteten Systemfunktionen wie zum Beispiel Interpolator, Lageregler oder zyklische Buskommunikation.
In der Darstellung gemäß FIG 3 wird in Form eines Strukturbildes gezeigt, dass die Steuerung eines technischen Prozesses P1 über das Runtime-System RTS einer industriellen Steuerung erfolgt. Die Verbindung zwischen dem Runtime-System RTS der Steuerung und dem technischen Prozess P1 geschieht bidirektional über die Ein-/Ausgänge EA. Die Programmierung der Steuerung und damit das Festlegen des Verhaltens des Runtime-Systems RTS geschieht im Engineering-System ES. Das Engineering-System ES enthält Werkzeuge für die Konfigurierung, Projektierung und Programmierung für Maschinen bzw. für die Steuerung technischer Prozesse. Die im Engineering-System erstellten Programme werden über den Informationspfad I in das Runtime-System RTS der Steuerung übertragen. Bezüglich seiner Hardware-Ausstattung besteht ein Engineering-System ES üblicherweise aus einem Computersystem mit Graphikbildschirm (z.B. Display), Eingabehilfsmitteln (z.B. Tastatur und Maus), Prozessor, Arbeits- und Sekundärspeicher, einer Einrichtung für die Aufnahme computerlesbarer Medien (z.B. Disketten, CDs) sowie Anschlusseinheiten für einen Datenaustausch mit anderen Systemen (z.B. weiteren Computersystemen, Steuerungen für technische Prozesse) oder Medien (z.B. Internet). Eine Steuerung besteht üblicherweise aus Eingabe- und Ausgabeeinheiten, sowie aus Prozessor und Programmspeicher. Es ist auch vorstellbar, dass die Steuerung eines technischen Prozesses P1 über mehrere Runtime-Systeme RTS von industriellen Steuerungen erfolgt.

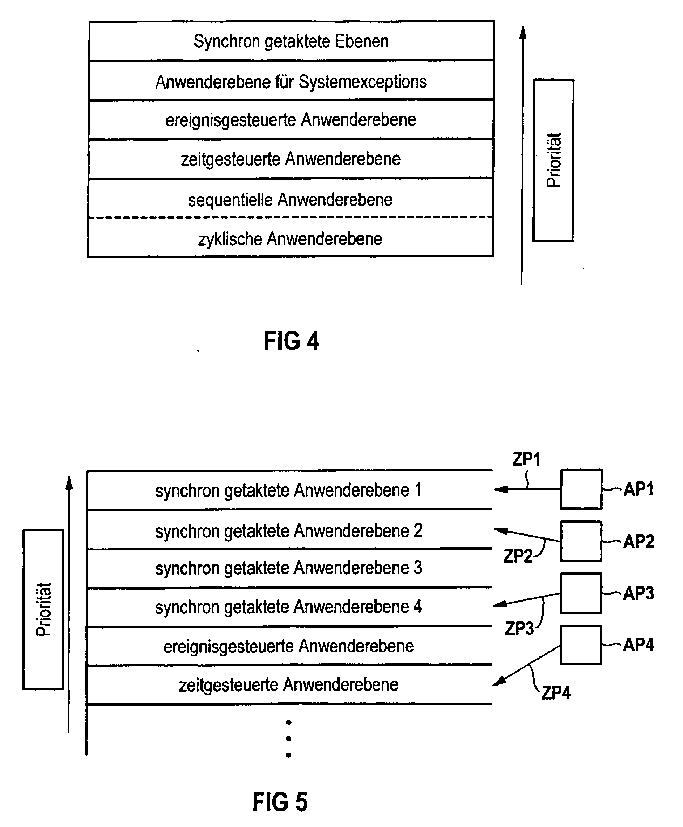

Die Darstellung gemäß FIG 4 zeigt das Ablaufebenenmodell der industriellen Steuerung. Die Priorisierung der Ebenen wird durch einen Pfeil in Richtung zur höchsten Priorität angedeutet. Die niederpriorsten Ebenen sind die "zyklische Anwenderebene" und die "sequentielle Anwenderebene". Diese beiden Ebenen laufen mit der gleichen Priorität. Deshalb sind diese Ebenen in der Darstellung gemäß FIG 4 durch eine gestrichelte Linie getrennt. Die "zyklische Anwenderebene" beinhaltet die "Background Task", die zykluszeitüberwacht ist. In der "sequentiellen Anwenderebene" werden die "Motion Tasks" durchlaufen. "Motion Tasks" sind nicht zykluszeitüberwacht und dienen im Wesentlichen zur Beschreibung sequentieller Abläufe. "Motion Tasks" werden quasiparallel abgearbeitet. Generell enthalten alle Anwenderebenen eine oder mehrere Tasks. Die Tasks nehmen die Anwenderprogramme auf. Die Tasks der "zyklische Anwenderebene" und der "sequentiellen Anwenderebene" werden in einem gemeinsamen Round-Robin-Zyklus abgearbeitet.

Die nächstfolgende Ebene ist die "zeitgesteuerte Anwenderebene". Die Tasks dieser Ebene werden zeitgesteuert aktiviert. Die Zeitsteuerung ist einer Granularität von Millisekunden einstellbar. Auf die "zeitgesteuerte Anwenderebene" folgt die "ereignisgesteuerte Anwenderebene". In dieser Ebene werden nach Erkennen eines User Interrupts so genannte "User Interrupt Tasks" aktiviert. User Interrupt Ereignisse können als logische Verknüpfung von Prozessereignissen und/oder internen Zuständen formuliert werden.

Die nächsthöhere Ebene ist die "Anwenderebene für System Exceptions". In dieser "Anwenderebene für System Exceptions" werden System Interrupts überwacht, bei deren Eintreffen so genannte "Exceptions", d.h. Ausnahmefallbehandlungen, generiert werden. In der "Anwenderebene für System Exceptions" gibt es z.B. folgende Tasks, die bei Auftreten eines entsprechenden System Interrupts aktiviert werden:
a) "Time Fault Task", die beim Ansprechen von Zeitüberwachungen aktiviert wird,
b) "Peripheral Fault Task", die z.B. bei Prozess- und Diagnosealarmen aktiviert wird, aber auch bei Stationsausfall oder Stationswiederkehr,
c) "System Fault Task", die bei allgemeinen Systemfehlern aktiviert wird,
d) "Program Fault Task", die bei Programmierfehlern (z.B. Division durch Null) aktiviert wird,
e) "Time Fault Background Task", die beim Ansprechen der Zykluszeitüberwachung der Background Task aktiviert wird und
f) "Technological Fault Task", die bei Technologiefehlern aktiviert wird.

Als nächstes folgt die Ebenengruppe "synchron getaktete Ebenen". Diese Ebenengruppe besitzt die höchste Priorität im Ablaufebenenmodell. Die einzelnen Ebenen dieser Ebenengruppe können untereinander weitere Priorisierungen aufweisen. Die Ebenengruppe "synchron getaktete Ebenen" besteht aus mindestens einer Systemebene und mindestens einer Anwenderebene. Die Systemebenen beinhalten die Systemfunktionen wie z.B. Lageregler oder Interpolator. In die Anwenderebenen dieser Ebenengruppe können von einem Anwender flexibel Anwenderprogramme (AP1 - AP4; FIG 5) zugeladen werden.

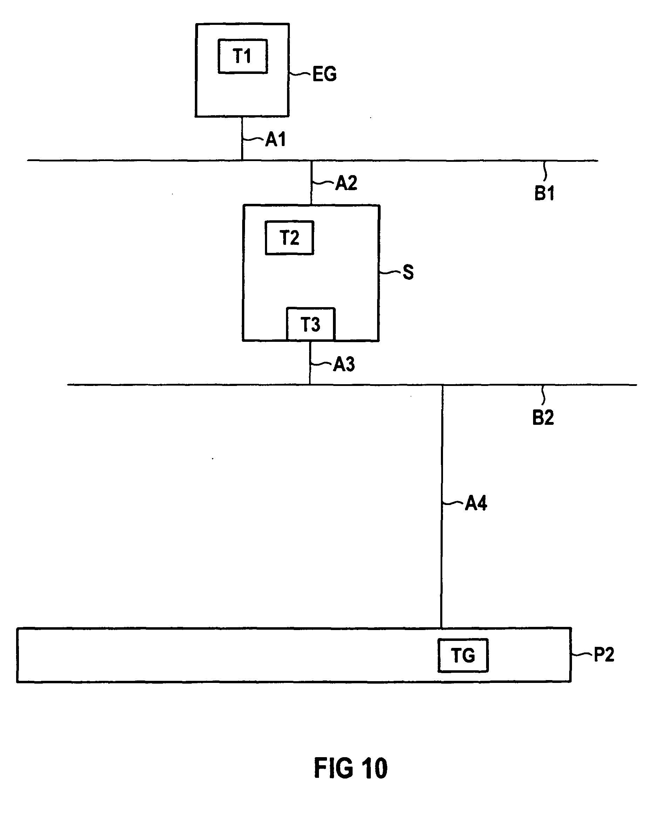

Für die Taktung der "synchron getakteten Ebenen" gibt es eine Reihe unterschiedlicher Taktgenerierungsmöglichkeiten. Der Grundtakt kann z.B. aus einem internen Timer (T1; FIG 10) kommen oder aus einem internen Takt (T3; FIG 10) eines Kommunikationsmediums (z.B. Profibus) oder aber der Takt kann auch aus einem Prozessereignis des technologischen Prozesses abgeleitet werden. Ein solches Prozessereignis kann z.B. die Taktrate (TG; FIG 10) eines Vorgangs an einer Produktionsmaschine oder Verpackungsmaschine sein. Anwenderebenen der Ebenengruppe "synchron getaktete Ebenen" können dabei basierend auf dem Grundtakt getaktet werden, sie können aber auch synchron zu einer der Systemebenen der Ebenengruppe "synchron getaktete Ebenen" laufen. Die Anwendertasks dieser zu einer Systemebene synchronen Anwenderebene haben somit eine synchrone, d.h. deterministische Beziehung zu einer vom Anwender flexibel festlegbaren Systemebene. Das hat den Vorteil, dass deterministische Reaktionen auf Systemtasks (Systemtasks laufen in den Systemebenen), die der Anwender in seinen Anwendertasks programmiert hat, die in den Anwenderebenen der Ebenengruppe "synchron getaktete Ebenen" laufen, vom System garantiert werden. Das heißt z.B., dass das System garantiert, dass diese "synchrone Anwenderebene" entsprechend beispielhaft vor dem Interpolator aktiviert wird oder aber auch vor einer beliebigen anderen Systemfunktion.

Die "zeitgesteuerte Anwenderebene", die "ereignisgesteuerte Anwenderebene", die "sequentielle Anwenderebene", die "zyklische Anwenderebene" sowie die "Anwenderebene für System Exceptions" sind optional.

Die Task der "zyklischen Anwenderebene" (Background Task) ist zykluszeitüberwacht. Die "Motion Tasks" dagegen sind nicht zykluszeitüberwacht und dienen im wesentlichen zur Beschreibung sequentieller Abläufe. Das heißt, das vorliegende Ablaufebenenmodell unterstützt einen Anwender sowohl bei der Programmierung von sequentiellen Abläufen als auch bei der Ereignisprogrammierung. Es können somit synchrone Ereignisse als auch asynchrone Ereignisse durch die Programmierung erfasst werden. In die Anwenderebenen sind die vom Anwender erstellten Anwenderprogramme (AP1 - AP4; FIG 5) zuladbar. Die Anwenderprogramme AP1 bis AP4 werden üblicherweise mit Hilfe einer Programmierumgebung des Engineering-Systems (ES; FIG 3) erstellt.

Die Darstellung gemäß FIG 5 zeigt ein Ausführungsbeispiel für das Zuladen von Anwenderprogramm in die Anwenderebenen. FIG 5 zeigt exemplarisch eine Ausprägung von Anwenderebenen des Ablaufebenenmodells. Durch die drei Punkte am unteren Rand der Zeichnung ist dargestellt, dass auch noch weitere Anwenderebenen, aber auch Systemebenen vorhanden sein können. Die Priorisierung der Ebenen wird wie im Vorangegangenen durch einen Pfeil in Richtung zur höchsten Priorität angedeutet. Den Anwenderebenen werden die Anwenderprogramme AP1 bis AP4, am rechten Bildrand durch kleine Rechtecke angedeutet, zugeordnet. Die Zuordnung wird dargestellt durch Zuordnungspfeile ZP1 bis ZP4. In den Anwenderebenen befinden sich Tasks, die die zugeladenen Anwenderprogramme AP1 bis AP4 aufnehmen. Diese Tasks werden dann nach einer gewissen Strategie (z.B. sequentiell) durchlaufen bzw. abgearbeitet. Sie können weiterhin die Eigenschaft besitzen, dass sie laufzeitüberwacht sind.

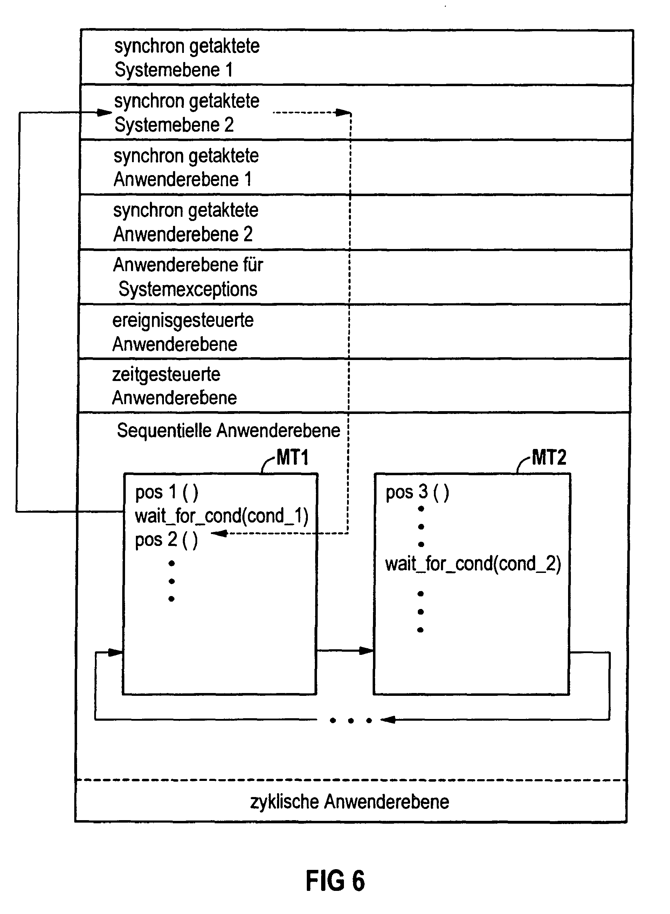

Die Darstellung gemäß FIG 6 zeigt ein Ausführungsbeispiel für den Gebrauch und den Mechanismus des Wait_for_Condition-Befehls, im Ablaufebenenmodell der erfindungsgemäßen industriellen Steuerung. Der Wait_for_Condition-Befehl (in FIG 6 dargestellt als wait_for_cond()) wird in dieser Darstellung exemplarisch in der "sequentiellen Anwenderebene" verwendet. Der Wait_for_Condition-Befehl wird in den vom Anwender erstellten "Motion Tasks" MT1 und MT2 verwendet, die Bestandteil der "sequentiellen Anwenderebene" sind. Die "Motion Tasks" MT1 und MT2 hängen in einem Round-Robin-Zyklus, dargestellt durch den Pfeil von MT1 nach MT2 und durch den abgewinkelten Pfeil von MT2 zu MT1. Die drei Punkte innerhalb dieses Pfeiles deuten an, dass noch weitere "Motion Tasks" im Round-Robin-Zyklus hängen können. Die "Motion Task" MT1 enthält den Wait_for_Condition-Befehl "wait_for_cond(cond_1)", die "Motion Task" MT2 den Wait_for-Condition-Befehl "wait_for_cond(cond_2)". Jeweils drei Punkte, die innerhalb von MT1 bzw. MT2 verwendet werden, deuten an, dass neben den beiden Wait_for_Condition-Befehlen und den drei Positionierbefehlen pos1() bis pos3() noch weitere Befehle in den "Motion Tasks" enthalten sein können.

Insgesamt besteht das in FIG 6 exemplarisch dargestellte Ablaufebenenmodell eines Runtime-Systems für eine industrielle Steuerung aus folgenden Ebenen (aufgezählt von niedrigster bis höchster Priorität): "zyklische Anwenderebene", "sequentielle Anwenderebene" (die Tasks dieser beiden Ebenen haben die gleiche Priorität, dargestellt durch die gestrichelte Linie zwischen diesen Ebenen), "zeitgesteuerte Anwenderebene", "ereignisgesteuerte Anwenderebene", "Anwenderebene für Systemexceptions", "synchron getaktete Anwenderebene 2", "synchron getaktete Anwenderebene 1", "synchron getaktete Systemebene 2" und als höchstpriore Ebene eine "synchron getaktete Systemebene 1".

Die Arbeitsweise des Wait_for_Condition-Befehls wird beispielhaft an "wait_for_cond(cond_1)" aus der "Motion Task" MT1 gezeigt. Ist die "Motion Task" MT1 im Round-Robin-Zyklus an der Reihe, werden die Befehle der "Motion Task" MT1 solange bedient, bis die Zeitscheibe abgelaufen ist, oder eine Unterbrechung kommt. Trifft dies zu, wird die "Motion Task" MT2 als nächste Task im Zyklus bedient, usw. Wird in der "Motion Task" MT1 der wait_for_cond(cond_1)-Befehl abgearbeitet, wird die Bedingung cond_1 überprüft. Ist cond_1 = true, also erfüllt, dann wird sofort der nächstfolgende Befehl pos2() ausgeführt und eventuell weitere in MT1 vorhandene Befehle sukzessive abgearbeitet, bis die Kontrolle an die nächste Task abgegeben wird.

Ist die Bedingung cond_1 = false, also nicht erfüllt, wird sofort die "Motion Task" MT1 unterbrochen und im Round-Robin-Zyklus wird MT2 bedient. Die Bedingung cond_1 wird aber in die "synchron getaktete Systemebene 2" eingehängt (angedeutet durch den durchgehenden abgewinkelten Pfeil vom wait_for_cond(cond_1)-Befehl zu der "synchron getakteten Systemebene 2") und im Takt dieser Systemebene auf ihr Erfülltsein überprüft. Ist die Bedingung cond_1 erfüllt, wird im Round-Robin-Zyklus die aktuelle Task verdrängt, d.h. ihr wird die Zeitscheibe entzogen und die Motion Task MT1 wird sofort unmittelbar nach dem wait_for_cond(cond_1) mit dem Positionierbefehl pos2() fortgesetzt. Durch den gestrichelten Pfeil wird der Rücksprung aus der "synchron getakteten Systemebene 2" zum Positionierbefehl pos2(), d.h. zur "sequentiellen Anwenderebene" angedeutet.

Dadurch, dass bei Nichterfülltsein der Bedingung des Wait_for_Condition-Befehls die Überprüfung der Bedingung in einer hochprioren "synchron getakteten Systemebene" stattfindet, und bei Erfülltsein der Bedingung sofort die unterbrochene "Motion Task" fortgesetzt wird, ist es einem Anwender möglich, bei der Programmierung von Bewegungssequenzen extrem zeitkritische Applikationen mit einfachen Sprachmitteln zu spezifizieren. Die Performance und Deterministik wird noch dadurch erhöht, dass beim Überprüfen der Bedingungen in den jeweiligen hochprioren "synchron getakteten Systemebenen" nur aktuell anstehende Bedingungen eingehängt und berücksichtigt werden.

Der hier beschriebene Mechanismus erfordert auch keinen expliziten Event-Handler. Der große Vorteil aus Anwendersicht liegt somit darin, dass der Anwender jetzt in einem sequentiellen Ablaufprogramm auf einer relativ niedrigen Prioritätsebene einer "Motion Task" in seinem Programmfluss hochpriore Ereignisse mit Hilfe von Programmkonstrukten formulieren kann und nicht in ein anderes Programm wechseln muss, das er dann über andere Mechanismen (z.B. per Hand oder interruptgesteuert) auf synchrone Anwendertask abbilden muss, sondern er hat die Möglichkeit, in einem geschlossenen Anwenderprogramm diesen Zyklus "Warten auf hochpriores Ereignis" und "hochpriore Reaktion" auf dieses Ereignis in einem Programm geschlossen zu formulieren.

Die Bedingungen, die in einem Wait_for_Condition-Befehl abgefragt werden, können vom Anwender sehr flexibel und elegant formuliert werden. So kann der Anwender zur Formulierung dieser Bedingungen Programmvariablen aus einem Anwenderprogramm verwenden oder interne Größen der Steuerung oder er kann auch Prozesssignale referenzieren. Diese Größen können dann logisch, arithmetisch oder mit beliebigen Funktionen inhaltlich verknüpft werden, um daraus eine Bedingung zu formulieren. Neben dem hochprioren Abfragen, ob die Bedingung erfüllt ist, kann man sich auch vorstellen, dass bei Erfülltsein der Bedingung auch noch dazugehöriger Programmcode, d.h. eine dahinterliegende Reaktion, die anwenderprogrammierbar ist, hochprior ausgeführt wird. Und dass erst nach der Ausführung dieses Programmcodes der Rücksprung in die niederpriore Ebene erfolgt.

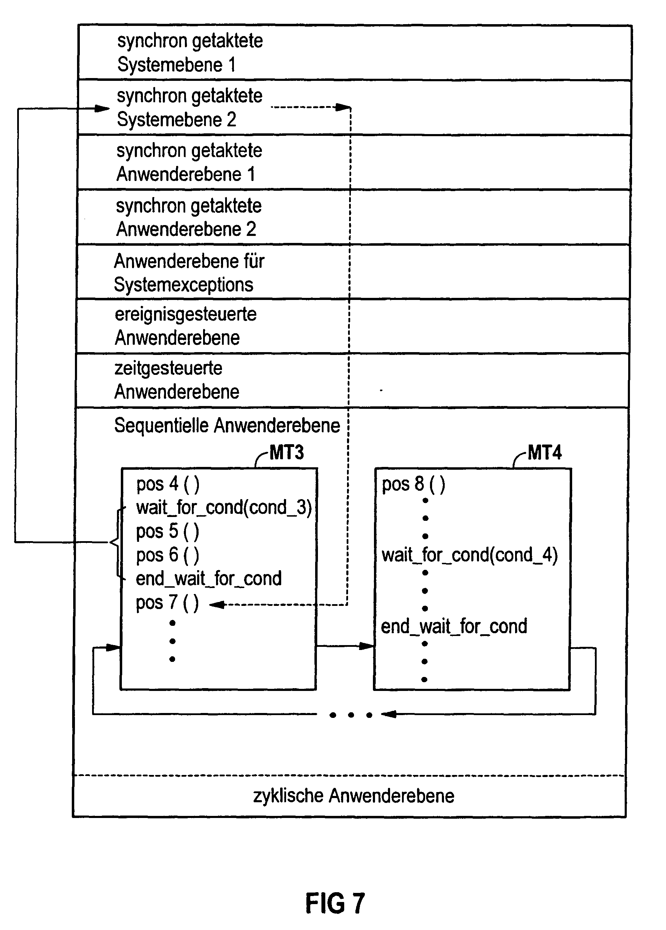

Die Darstellung gemäß FIG 7 zeigt ein erweitertes Ausführungsbeispiel für den Gebrauch und den Mechanismus des Wait_for_Condition-Befehls, im Ablaufebenenmodell der erfindungsgemäßen industriellen Steuerung. Der Wait_for_Condition-Befehl (in FIG 7 ebenfalls dargestellt als wait_for_cond()) wird in dieser Darstellung exemplarisch in der "sequentiellen Anwenderebene" verwendet. Der Wait_for_Condition-Befehl wird in den vom Anwender erstellten "Motion Tasks" MT3 und MT4 verwendet, die Bestandteil der "sequentiellen Anwenderebene" sind. Die "Motion Tasks" MT3 und MT4 hängen in einem Round-Robin-Zyklus, dargestellt durch den Pfeil von MT3 nach MT4 und durch den abgewinkelten Pfeil von MT4 zu MT3. Die drei Punkte innerhalb dieses Pfeiles deuten an, dass noch weitere "Motion Tasks" im Round-Robin-Zyklus hängen können. Die "Motion Task" MT3 enthält den Wait_for_Condition-Befehl "wait_for_cond(cond_3)", die "Motion Task" MT4 den Wait_for-Condition-Befehl "wait_for_cond(cond_4)". Jeweils drei Punkte, die innerhalb von MT3 bzw. MT4 verwendet werden, deuten an, dass neben den beiden Wait_for_Condition-Befehlen und den Positionierbefehlen pos4() bis pos8() noch weitere Befehle in den "Motion Tasks" enthalten sein können. Durch die programmiersprachlichen Konstrukte "wait_for_cond()" und "end_wait_for_cond" wird eine Programmsequenz in den "Motion Tasks" geklammert. In der "Motion Task" MT3 sind die Befehle pos5() und pos6() auf diese Weise geklammert. Auch in der "Motion Task" MT4 wird die Verwendung von "wait_for_cond()" und "end_wait_for_cond" angedeutet. Durch jeweils 3 Punkte ist in der "Motion Task" MT4 skizziert, dass vor, innerhalb und nach dem "wait_for_cond() - end_wait_for_cond"-Konstrukt weitere Anweisungen vorhanden sein können.

Das in FIG 7 exemplarisch dargestellte Ablaufebenenmodell eines Runtime-Systems für eine industrielle Steuerung besteht wie in FIG 6 aus folgenden Ebenen (aufgezählt von niedrigster bis höchster Priorität): "zyklische Hintergrundebene", "sequentielle Anwenderebene" (die Tasks dieser beiden Ebenen haben die gleiche Priorität, dargestellt durch die gestrichelte Linie zwischen diesen Ebenen), "ereignisgesteuerte Anwenderebene", "zeitgesteuerte Anwenderebene", "Anwenderebene für Systemexceptions", "synchron getaktete Anwenderebene 2", "synchron getaktete Anwenderebene 1", "synchron getaktete Systemebene 2" und als höchstpriore Ebene eine "synchron getaktete Systemebene 1".

In FIG 7 wird die Arbeitsweise des Wait_for_Condition-Befehls mit einer dazugehörigen Programmsequenz gezeigt beispielhaft an "wait_for_cond(cond_3)" aus der "Motion Task" MT3 gezeigt. Das Überprüfen der Bedingung cond_3 und das Abarbeiten der dazugehörigen Programmsequenz (geklammert zwischen "wait_for_cond(cond_3)" und "end_wait_for_cond") erfolgen dabei auf einer höherprioren Ebene des Ablaufebenenmodells. Die zu "wait_for_cond(cond_3)" dazugehörigen Programmsequenz wird durch die Abfolge der Befehle pos5() und pos6() gebildet.

Ist die "Motion Task" MT3 im Round-Robin-Zyklus an der Reihe, werden die Befehle der "Motion Task" MT3 solange bedient, bis die Zeitscheibe abgelaufen ist, oder eine Unterbrechung kommt. Trifft dies zu, wird die "Motion Task" MT4 als nächste Task im Zyklus bedient, usw. Wird in der "Motion Task" MT3 der "wait_for_cond(cond_3)"-Befehl abgearbeitet, so wird die Bedingung cond_3 überprüft. Ist cond_3 = true, also erfüllt, dann wird der normale Programmablauf fortgesetzt, d.h. als nächstes wird der Befehl pos5() ausgeführt und eventuell weitere in MT3 vorhandene Befehle sukzessive abgearbeitet, bis die Kontrolle an die nächste Motion Task abgegeben wird.

Ist die Bedingung cond_3 = false, also nicht erfüllt, wird sofort die "Motion Task" MT3 unterbrochen und im Round-Robin-Zyklus wird MT4 bedient. Die Bedingung cond_3 und die Befehle pos5() und pos6() (als dazugehörige Programmsequenz) werden in der Priorität der "synchron getakteten Systemebene 2" bearbeitet (angedeutet durch den durchgehenden abgewinkelten Pfeil, ausgehend von der Klammer, die die Zusammengehörigkeit von wait_for_cond(cond_3), end_wait_for_cond und dazugehöriger Programmsequenz ausdrückt, hin zu der "synchron getakteten Systemebene 2"). Im Takt dieser Systemebene wird cond_3 auf ihr Erfülltsein überprüft. Ist die Bedingung cond_3 erfüllt, wird mit der Priorität der "synchron getakteten Systemebene 2" die dazugehörige Programmsequenz (hier: die Abfolge der Befehle pos5() und pos6() abgearbeitet. Durch den gestrichelten Pfeil wird der Rücksprung aus der "synchron getakteten Systemebene 2" zum Positionierbefehl pos7(), d.h. zur "sequentiellen Anwenderebene" angedeutet.

Dadurch, dass bei Nichterfülltsein der Bedingung des Wait_for_Condition-Befehls die Überprüfung der Bedingung in einer hochprioren "synchron getakteten Systemebene" stattfindet, und bei Erfülltsein der Bedingung sofort eine dazugehörige, vom Anwender erstellbare Programmsequenz auf dieser hochprioren Systemebene ausgeführt wird, können sogar extrem zeitkritische Applikationen mit einfachen Sprachmitteln spezifiziert und durchgeführt werden.

Ein möglicher Anwendungsfall ist die Druckmarkensynchronisation. Dabei geht es darum, eine Druckmarke auf einem Material hochprior zu erkennen. Beim Erkennen dieser Druckmarke wird typischerweise ein Istwert erfasst ("Latchen" z.B. eines Lage- oder Geberistwertes). Ausgehend von diesem erfassten Istwert wird ein Korrekturwert berechnet, der dem System als überlagerte Bewegung aufgeprägt wird. Der Vorgang Istwert-Erkennung, Korrekturwert-Berechnung und Durchführung der überlagerten Bewegung muss in einer deterministischen Zeitdauer erfolgen. Deswegen muss dieser Vorgang hochprior stattfinden.

Ein weiterer Anwendungsfall ist der "schnelle Bewegungsstart". Hier geht es darum, z.B. Flankenwechsel sehr schnell zu erkennen und daran sofort anschließend einen Bewegungsstart (z.B. Positionierbewegung) zu beginnen. Die Deterministik Erkennen eines Ereignisses und Auslösen von Folgeaktionen ist entscheidend für die Produktivität einer Maschine. Bei Produktionsmaschinen müssen solche zyklischen Vorgänge in einer deterministischen Zeit, z.B. <100 ms oder <50 ms erfolgen. Beim Abarbeiten der Tasks auf einer normalen Hintergrundebene kann diese Deterministik nicht garantiert werden. Der beschriebene Mechanismus ist besonders für einen Einsatz bei Maschinen geeignet, die periodische Maschinenzyklen aufweisen.

Die Performance wird noch dadurch erhöht, dass beim Überprüfen der Bedingungen in den jeweiligen hochprioren "synchron getakteten Systemebenen" nur aktuell anstehende Bedingungen eingehängt und berücksichtigt werden.

Der hier beschriebene Mechanismus erfordert, wie schon in FIG 6 erwähnt, keinen expliziten Event-Handler. Der große Vorteil aus Anwendersicht liegt somit darin, dass der Anwender jetzt in einem sequentiellen Ablaufprogramm auf einer relativ niedrigen Prioritätsebene einer "Motion Task" in seinem Programmfluss hochpriore Ereignisse mit Hilfe von Programmkonstrukten formulieren kann und nicht in ein anderes Programm wechseln muss, das er dann über andere Mechanismen (z.B. per Hand oder interruptgesteuert) auf synchrone Anwendertask abbilden muss, sondern er hat die Möglichkeit, in einem geschlossenen Anwenderprogramm diesen Zyklus "Warten auf hochpriores Ereignis" und "hochpriore Reaktion" auf dieses Ereignis in einem Programm geschlossen zu formulieren.

Der Wait_for_Condition-Befehl kann vom Anwender sehr flexibel und einfach eingesetzt werden, da er als normales programmiersprachliches Konstrukt zur Verfügung steht. Auch die Formulierung der Bedingungen ist für einen Anwender flexibel und einfach. So kann der Anwender zur Formulierung dieser Bedingungen Programmvariablen aus einem Anwenderprogramm verwenden oder interne Größen der Steuerung oder er kann auch Prozesssignale referenzieren. Diese Größen können dann logisch, arithmetisch oder mit beliebigen Funktionen inhaltlich verknüpft werden, um daraus eine Bedingung zu formulieren.

Durch das Wait_for_Condition-Konstrukt hat ein Anwender die Möglichkeit in normalen Anwenderprogrammen für Bewegungssequenzen, ein Anwenderprogramm temporär auf eine höhere Prioritätsebene zu legen, um deterministische Vorgänge garantieren zu können.

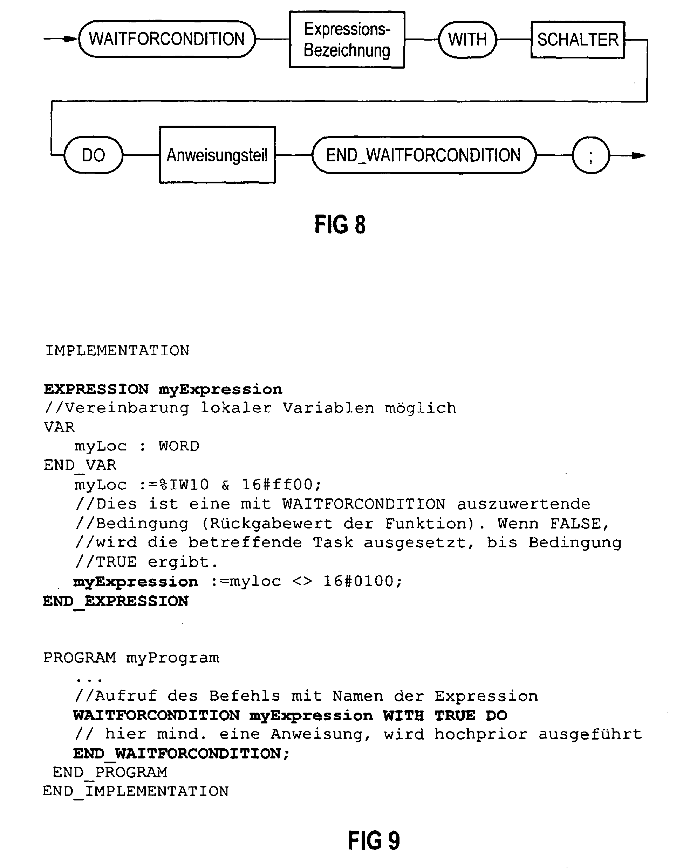

Darstellung gemäß FIG 8 zeigt das programmiersprachliche Konstrukt des wait_for_condition-Mechanismus als Syntaxdiagramm. Die terminalen Elemente sind dabei mit abgerundeten Ecken dargestellt: "WAITFORCONDITION", "WITH", "DO", "END_WAITFORCONDITION" und ";". Als Rechtecke sind die nichtterminalen Elemente dargestellt: "Expressions-Bezeichnung, "SCHALTER" und "ANWEISUNGSTEIL". Die Elemente "WITH" und "SCHALTER" sind optional.

Darstellung gemäß FIG 9 zeigt die Verwendung des Wait_for_Condition-Konstruktes in einem Programmablauf. Im oberen Teil von FIG 9 ist die Formulierung der Bedingung "my-Expression" dargestellt, im unteren Teil ist gargestellt, wie diese Bedingung in einem Wait_for_Condition-Konstrukt verwendet wird.

Darstellung gemäß FIG 10 zeigt in einer Schemadarstellung Möglichkeiten, wie der Grundtakt für die industrielle Steuerung gewonnen wird. FIG 10 zeigt exemplarisch eine Kommunikationstopologie, in die die Steuerung S integriert ist. Die Steuerung S ist durch ein Rechteck dargestellt. Durch eine Anschlussleitung A2 ist die Steuerung S mit dem Bus B1 verbunden, an dem über eine Anschlussleitung A1 das externe Gerät EG hängt. Über den Bus B2 erfolgt die Verbindung zum technischen Prozess P2. Der technische Prozess P2 ist am unteren Bildrand durch ein Rechteck dargestellt. Über die Anschlussleitung A3 ist die Steuerung S mit dem Bus B2 verbunden, der wiederum über die Anschlussleitung A4 die Verbindung zum technischen Prozess P2 herstellt.

Die Generierung für den Grundtakt der Steuerung S kann aus unterschiedlichen Taktquellen erfolgen. So z.B. aus einer internen Taktquelle, dargestellt durch den internen Timer T2 der Steuerung S oder auch durch eine externe Taktquelle wie z.B. den Timer T1, der zum externen Gerät EG gehört. Als externe Taktquelle kann aber auch der Grundtakt eines Kommunikationsmediums dienen. Wenn der Bus B2 z.B. durch einen äquidistanten Profibus realisiert wird, dann kann der Takt für die Steuerung aus dem Grundtakt dieses Busses gewonnen werden. In FIG 10 ist dies dargestellt dadurch, dass der Timer T3 direkt an der Anschlussleitung A3 positioniert ist, und diese Anschlussleitung A3 stellt die Verbindung zum Bus B2 her. Die Steuerung hängt somit als Slave am Bus und kann direkt den Bustakt verwenden. Weiterhin kann als externe Taktquelle ein Taktgeber TG dienen, der im technischen Prozess P2 integriert ist. Ein Taktgeber TG in einem technischen Prozess kann z.B. der Arbeitstakt einer Produktionsmaschine oder Verpackungsmaschine sein. In der Darstellung gemäß FIG 10 sind als Kommunikationsmedien beispielshaft Busverbindungen dargestellt. Es können aber als Kommunikationsmedien aber auch Ring-, Stern- oder andere Verbindungsarten gewählt werden, auch wireless-Verbindungen. Aus diesen Verbindungssystemen kann dann der oben genannte Grundtakt abgeleitet werden.

## Patentansprüche

1. Verfahren zur Programmierung von zyklischen Maschinen, **gekennzeichnet durch** folgende aufeinander folgenden Schritte:
d) Erstellen einer mit einem Runtime-System (RTS) ausgestatteten industriellen Steuerung (S) mit priorisierten Ablaufebenen und Tasks, wobei mindestens eine sequentielle Ablaufebene erstellt wird,
e) Formulieren eines Maschinenablaufs in einem sequentiellen Programm und
f) im sequentiellen Programm **durch** spezifische Mechanismen Bereitstellen, dass
1) das Warten auf das Erfülltsein von Bedingungen in einer hochprioren synchron getakteten Systemebene, hochprior durchgeführt werden kann und
2) dass nach Erfülltsein der Bedingung die nachfolgende Programmsequenz bis zu einem definierten anwenderprogrammierten Ende in der hochprioren synchron getakteten Systemebene, hochprior durchgeführt werden kann,
wobei den Ablaufebenen Systemprogramme, Anwenderprogramme (AP1 - AP4) oder beide zugeordnet werden.

2. Verfahren zur Programmierung nach Anspruch 1,
**dadurch gekennzeichnet,**
**dass** die Ablaufebenen aus Systemebenen, Anwenderebenen oder beiden erstellt werden.

3. Verfahren zur Programmierung nach Anspruch 1 oder 2,
**dadurch gekennzeichnet,**
**dass** das Ablaufebenenmodell getaktet ist, wobei der Grundtakt aus einem internen Timer (T2) ableitbar ist.

4. Verfahren zur Programmierung nach Anspruch 1 oder 2,
**dadurch gekennzeichnet, dass**
das Ablaufebenenmodell getaktet ist, wobei der Grundtakt aus einem internen Takt eines Kommunikationsmediums (B1, B2) ableitbar ist

5. Verfahren zur Programmierung nach Anspruch 1 oder 2,
**dadurch gekennzeichnet, dass**
das Ablaufebenenmodell getaktet ist, wobei der Grundtakt aus einem externen Gerät (EG) ableitbar ist.

6. Verfahren zur Programmierung nach Anspruch 1 oder 2,
**dadurch gekennzeichnet, dass**
das Ablaufebenenmodell getaktet ist, wobei der Grundtakt von einer Größe (TG), die zum technologischen Prozess (P1, P2) gehört, ableitbar ist.

## Claims

1. Method of programming cyclical machines,
**characterised by** the following successive steps:
d) creating an industrial controller (S) equipped with a runtime system (RTS) and having prioritised running levels and tasks, wherein at least one sequential running level is created,
e) formulating a machine sequence in a sequential program and
f) providing in the sequential program by means of specific mechanisms that
1) the waiting for conditions to be satisfied can be carried out with high priority in a high-priority synchronously clocked system level, and
2) after the condition has been satisfied the subsequent program sequence can be carried out with high priority up to a defined user-programmed end in the high-priority synchronously clocked system level,
wherein the running levels are assigned system programs, user programs (AP1 - AP4) or both.

2. Method of programming according to claim 1,
**characterised in that**
the running levels are created from system levels, user levels or both.

3. Method of programming according to claim 1 or 2,
**characterised in that**
the running level model is clocked, with the basic clock being derivable from an internal timer (T2).

4. Method of programming according to claim 1 or 2,
**characterised in that**
the running level model is clocked, with the basic clock being derivable from an internal clock of a communication medium (B1, B2).

5. Method of programming according to claim 1 or 2,
**characterised in that**
the running level model is clocked, with the basic clock being derivable from an external device (EG).

6. Method of programming according to claim 1 or 2,
**characterised in that**
the running level model is clocked, with the basic clock being derivable from a variable (TG) which belongs to the technological process (P1, P2).

## Revendications

1. Procédé de programmation de machines cycliques, **caractérisé par** les stades successifs suivants :
d) on établit une commande ( S ) industrielle équipée d'un runtine-system ( RTS ) ayant des plans de marche et des tâches rendus prioritaires, au moins un plan de marche séquentiel étant établi,
e) on formule une marche de machine dans un programme séquentiel,
f) on fait en sorte dans le programme séquentiel par des mécanismes spécifiques que :
1) l'entretien puisse être effectué d'une manière très prioritaire lorsque sont satisfaites des conditions dans un plan de système cadencé de manière synchrone et très prioritaire, et
2) après que la condition a été satisfaite, la séquence de programme suivante peut être effectuée d'une façon très prioritaire jusqu'à une fin définie et programmée par l'utilisateur dans le plan de système cadencé de manière synchrone et très prioritaire,
des programmes de système, des programmes d'utilisateur ( AP1 à AP4 ) ou les deux étant associés aux plans de marche.

2. Procédé de programmation suivant la revendication 1, **caractérisé**
**en ce que** l'on établit les plans de marche à partir de plans de système, de plans d'utilisateur ou des deux.

3. Procédé de programmation suivant la revendication 1 ou 2, **caractérisé**
**en ce que** l'on cadence le modèle de plans de marche, la cadence de base pouvant être déduite d'une horloge ( T2 ) interne.

4. Procédé de programmation suivant la revendication 1 ou 2, **caractérisé,**
**en ce que** l'on cadence le modèle de plans de marche, la cadence de base pouvant être déduite d'une horloge interne d'un support ( B1, B2 ) de communication.

5. Procédé de programmation suivant la revendication 1 ou 2, **caractérisé,**
**en ce que** l'on cadence le modèle de plans de marche, la cadence de base pouvant être déduite d'un appareil ( EG ) extérieur.

6. Procédé de programmation suivant la revendication 1 ou 2, **caractérisé**,
en qu'on cadence le modèle de plans de marche, la cadence de base pouvant être déduite d'une grandeur ( TG ) qui appartient au processus ( P1, P2 ) technologique.
